# EUROPEAN PATENT APPLICATION

(11) **EP 4 440 194 A1**
(43) Date of publication of application: **02.10.2024**
(21) Application number: 23165198.5
(22) Date of filing: 29.03.2023
(51) Int. Cl.: H04W 36/00, H04W 24/02

(54) **COMPUTER-IMPLEMENTED METHOD FOR CONTROLLING THE HANDOVER OF AT LEAST ONE USER EQUIPMENT ON A MOVING ENTITY**

(71) Applicant: Siemens Aktiengesellschaft, 80333 München (DE)
(72) Inventor: The designation of the inventor has not yet been filed
(74) Representative: Siemens Patent Attorneys

(57) **Abstract**

Computer-implemented method for controlling the handover of at least one User Equipment on a moving entity, such as on a vehicle (AGV), from one cell of a mobile communication system according to fifth-generation technology standard to a neighboring cell of the mobile communication system, using a Neighbor Cell Relation Table (NCRT) which lists possible neighboring cells, comprising the steps of
- continuously obtaining handover failure data of a multitude of cells of the mobile communication system,
- continuously employing a machine learning engine (MLE) that computes a probability for successful handover from at least one cell of the mobile communication system to each of at least two neighboring cells of the mobile communication system, based on the obtained handover failure data,
- continuously updating the Neighbor Cell Relation Table (NCRT) with priorities (PRIO) for the at least two neighboring cells of the mobile communication system which priorities are deduced from the probability for successful handover and which priorities are higher for higher probability for successful handover and lower for lower probability for successful handover,
- in case of handover from one cell to one of the neighboring cells choosing the neighboring cell with the highest probability for successful handover.

By automatically generating and updating the priorities for neighboring cells handover failures can be reduced.

## Description

### FIELD OF THE INVENTION

The present invention relates to a computer-implemented method for controlling the handover of at least one User Equipment on a moving entity, such as on a vehicle, from one cell of a mobile communication system according to fifth-generation technology standard to a neighboring cell of the mobile communication system, using a Neighbor Cell Relation Table which lists possible neighboring cells.

The present invention also relates to respective computer program code means and to a respective computer-implemented device.

The present invention uses a mobile communication system according to fifth-generation (or 5G) technology standard, which are also called 5G networks. 5G networks are cellular networks in which the service area is divided into small geographical areas called cells. All 5G wireless devices, also called User Equipment or UE, in a cell communicate by radio waves with a cellular base station via fixed antennas, over frequency channels assigned by the base station. A User Equipment or UE in the terminology of 5G communication is integrated in each of the moving entities, such as vehicles, for wireless communication.

Several standards for 5G technology have been defined by the 3rd Generation Partnership Project (3GPP). 3GPP defines "5G" as any system using 5G NR (5G New Radio) software.

The present invention can favourably be used in connection with self-optimizing networks (SON), see e.g. ETSI TS 128 313 V16.0.0 (2020-10), which e.g. use ANR Function.

The function of the Neighbor Cell Relation Table (NCRT) is e.g. defined in ETSI TS 138 300 V15.5.0 (2019-05).

A gNodeB (or gNB) is a 3GPP-compliant implementation of the 5G NR base station. A gNodeB is responsible for radio communication with UEs in his coverage area, i.e. its cell. A gNodeB may be a physical entity, e.g. a tower, or a virtual entity, such as a software defined radio (SDR).

### STATE OF THE ART

The use of 5G networks for controlling automated guided vehicles (AGV), e.g. for controlling material handling robots in EP3731048A1, is known.

For the mobility of the UEs in wireless communication systems a so called Handover feature (HO feature) is used. This means that while a certain UE is moving from one place to another it tries to release the connection with the serving cell (source cell) while trying to get connected to another cell (target cell), i.e. a neighboring cell. Before the handover (HO) is executed the "Neighbor Cell Relation Table (NCRT)", which lists possible neighboring cells, is used to figure out those neighboring cells to which this UE can handover. After the cells are figured out the UE scans these cells and sorts out according to their signal level.

Latest technology used for HO in 5G networks is the adaptive neighbor relation (ANR) feature on gNodeB. The ANR feature is one of the self-optimizing networks (SON) functions that has been introduced with LTE and that is also started to be used in 5G next generation systems. The ANR function is realized in gNodeB which is managing the NCRT of its cell. According to 3GPP specifications the ANR feature has two functions: neighbor removal and neighbor detection. There exists no prioritizing function. With the help of ANR feature the NCRT is filled with the neighboring cells, however, users can additionally fill the NCRT manually with priorities, thus prioritizing the relations from a certain cell to its neighboring cells. These priorities are one-directional which means that the priority for handing over from cell A to cell B, which priority is listed in the NCRT of gNodeB of cell A, can be different for the priority for handing over from cell B to cell A, which priority is listed in the NCRT of gNodeB of cell B.

Of course it is very cumbersome to fill in priorities manually since these priorities have to be adapted if properties of one of the involved cells change. If priorities are not adapted manually handover failures will rise.

### SUMMARY OF THE INVENTION

One object of the present invention therefore is to provide a method for automatically generating and updating the priorities for neighboring cells, in order to provide better, i.e. more seamless, handover and to reduce handover failures.

This object is achieved by a method according to claim 1. Claim 1 contains a computer-implemented method for controlling the handover of at least one User Equipment on a moving entity, such as on a vehicle, from one cell of a mobile communication system according to fifth-generation technology standard to a neighboring cell of the mobile communication system, using a Neighbor Cell Relation Table which lists possible neighboring cells, comprising the steps of
- continuously obtaining handover failure data of a multitude of cells of the mobile communication system,
- continuously employing a machine learning engine that computes a probability for successful handover from at least one cell of the mobile communication system to each of at least two neighboring cells of the mobile communication system, based on the obtained handover failure data,
- continuously updating the Neighbor Cell Relation Table (NCRT) with priorities for the at least two neighboring cells of the mobile communication system which priorities are deduced from the probability for successful handover and which priorities are higher for higher probability for successful handover and lower for lower probability for successful handover,
- in case of handover from one cell to one of the neighboring cells choosing the neighboring cell with the highest probability for successful handover.

With the method according to the invention handover failures can be reduced since for handover the neighboring cell with the best handover results in the past is chosen. The machine learning engine is continuously fed with handover failure data and continuously computes a probability for successful handover. Due to the continuous process the probabilities always reflect the current situation.

By the before learned experiences, i.e. by the handover failures that have occurred, target handover candidates can be prioritized in order to reduce or even eliminate handover failures. Usually, target cells which have higher outgoing HO success rates will have the first priority.

The moving entity can be a person carrying a User Equipment. However, the moving entity normally will be a vehicle, such as a car or a truck, and can especially be a so called automated guided vehicle (AGV), which is a portable robot that follows along marked long lines or wires on the floor, or uses radio waves, vision cameras, magnets, or lasers for navigation. Such AGVs can be used in industry, e.g. in manufacturing of products. There AGVs can deliver raw materials, transport work pieces or move finished goods.

So the invention is favourably used in mobile communication systems including Vehicle-to-everything (V2X) communication or AGV communication in industrial 5G networks.

In industrial 5G networks several AGVs are connected to the mobile communication system and move in the factory area between different cells so that a handover of the User Equipment of the single AGVs occurs between different cells. These handovers create dynamic handover statistics about successful operations or failures with reasons.

Usually, each gNodeB stores its own Neighbor Cell Relation Table (NCRT) for its cell. So the NCRT of a certain gNodeB, and thus of a certain cell, contains Neighbor Cell Relation information of all neighboring cells.

The machine learning engine obtains handover failure data of a multitude of cells and usually will compute a probability for successful handover for a multitude of cells, i.e. the machine learning engine will update the NCRT in the gNodeB of all this cells.

According to one embodiment of the invention the machine learning engine puts a higher weight to younger handover failure data than to older handover failure data. Thus any recent developments in the neighboring cells, such as increasing or decreasing signal levels of a certain gNodeB, have a stronger influence on the probability than developments in the past.

According to one embodiment of the invention the handover failure data is obtained from network management functions of the mobile communication system. Such network management functions are usually named "Operations And Maintenance" (OAM). CAM is a group of network management functions that provide network fault indication, performance information, and data and diagnosis functions. The standard ITU-T I.610 [ITU-T-I.610] is an example specification that uses the term OAM. A further example where CAM is used is ITU-T Y.1731 [ITU-T-Y.1731].

Hand over failure data may contain handover statistics with a relative number of failed handovers from at least one cell of the mobile communication system to a neighboring cell of the mobile communication system. A relative number of failed handovers can be the absolute number of failed handovers divided by the sum of failed and successful handovers, for a defined time span.

A multitude of handovers by several moving entities creates dynamic handover statistics about successful operations or failures with reasons. These statistics is received by the network management functions, i.e. by OAM, and this data is used by the machine learning engine to optimize the different NCRTs for future handovers involving the respective cells. The dynamic modification of the different NCRTs increases the successful handover rates in the mobile communication system. Thanks to the prediction of handover failures, i.e. by having computed a reduced probability for successful handover for a certain pair of cells in a certain direction, future handover failures will be reduced or even prevented.

The present invention also relates to a respective computer program code means which comprises instructions to cause a system containing at least one User Equipment on a moving entity, such as on a vehicle, the mobile communication system, the machine learning engine and the Neighbor Cell Relation Table to perform all the steps of any one of the method claims.

The present invention also relates to a computer-implemented device comprising at least one User Equipment on a moving entity, such as on a vehicle, the mobile communication system, the machine learning engine and the Neighbor Cell Relation Table, which device is adapted to execute a method according to one of the method claims.

The present invention overcomes the need to update the NCRT manually. Also, manual intervention cannot cover all possible scenarios, for example when the signal levels of the neighboring cells are increasing or decreasing due to operation and maintenance activities. But the present invention is adaptive to cover all possible scenarios because hadover failures are taken into account continuously.

### BRIEF DESCRIPTION OF FIGURES

The invention will be explained in closer detail by reference to a preferred embodiment, which is depicted schematically in the figure.

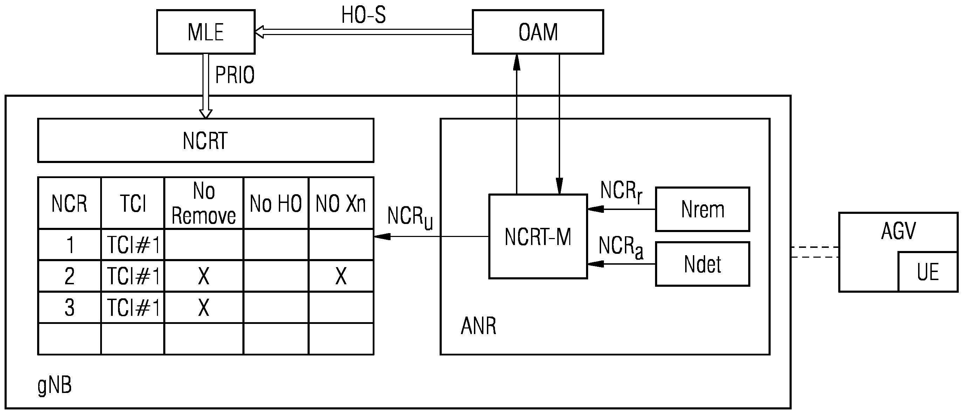

- Fig. 1: shows a scheme of a computer-implemented device according to the invention.

### WAYS TO IMPLEMENT THE INVENTION

Fig. 1 shows the gNodeB gNB of a certain cell of a mobile communication system according to fifth-generation technology standard. Neighboring cells are not depicted. This gNodeB gNB establishes a communication connection with an automated guided vehicle AGV being located in its cell via the User Equipment UE of the automated guided vehicle AGV.

In this example the gNodeB gNB and its functions are designed according to ETSI TS 138 300 V15.5.0 (2019-05). The gNodeB gNB, that is its computer program and databases, contains a Neighbor Cell Relation Table NCRT and an ANR function ANR. The purpose of ANR function is to relieve the operator from the burden of manually managing Neighbor Cell relations

(NCRs). The ANR function resides in the gNodeB gNB and manages the Neighbor Cell Relation Table NCRT, see arrow NCRu for Neighbor Cell Relation update, by means of the Neighbor Cell Relation Table (NCRT) Management Function NCRT-M. Located within ANR, the Neighbor Detection Function Ndet finds new neighbors and adds them to the NCRT, see arrow NCRa for Neighbor Cell Relation add. ANR also contains the Neighbor Removal Function Nrem which removes outdated NCRs, see arrow NCRr for Neighbor Cell Relation remove. An existing NCR from a source cell to a target cell means that the gNodeB gNB controlling the source cell:
a) Knows the global and physical IDs (e.g. NR CGI/NR PCI, ECGI/PCI) of the target cell.
b) Has an entry in the NCRT for the source cell identifying the target cell (2^{nd} column in NCRT) .
c) Has the attributes in this NCRT entry defined, either by CAM or set to default values (3^{rd} to 5^{th} column in NCRT) .

NCRs are cell-to-cell relations, Neighbor Cell Relations are unidirectional.

The ANR function also allows CAM to manage the NCRT. CAM can add and delete NCRs, see arrow from CAM to NCRT-M. CAM can also change the attributes of the NCRT. The CAM system is informed about changes in the NCRT, see arrow from NCRT-M to OAM.

Now according to the invention the CAM continuously obtains handover failure data in the form of handover statistics HO-S and feeds the machine learning engine MLE with this data. For a multitude of cells the machine learning engine MLE computes a probability for successful handover from one cell to the neighboring cells. For each pair of cells and for each direction of handover the machine learning engine MLE translates these probabilities into priorities PRIO. These priorities are entered into the NCRT of the respective cell. In this case a 6^{th} column could be added to the NCRT where the priorities for each neighboring cell are added. When there is a handover of one AGV from the respective cell to a neighboring cell, the neighboring cell with the highest priority is chosen, i.e. with the highest probability for successful handover.

### LIST OF REFERENCE SIGNS

- AGV: automated guided vehicle
- ANR: ANR function
- gNB: gNodeB
- HO-S: handover statistics
- MLE: machine learning engine
- NCRT: Neighbor Cell Relation Table (NCRT)
- NCRa: Neighbor Cell Relation add
- NCRr: Neighbor Cell Relation remove
- NCRu: Neighbor Cell Relation update
- NCRT-M: Neighbor Cell Relation Table (NCRT) Management Function
- Nrem: Neighbor Removal Function
- Ndet: Neighbor Detection Function
- CAM: Operations And Maintenance (OAM)
- PRIO: priorities
- UE: User Equipment

Independent of the grammatical term usage, individuals with male, female or other gender identities are included within the term.

## Claims

1. Computer-implemented method for controlling the handover of at least one User Equipment on a moving entity, such as on a vehicle (AGV), from one cell of a mobile communication system according to fifth-generation technology standard to a neighboring cell of the mobile communication system, using a Neighbor Cell Relation Table (NCRT) which lists possible neighboring cells, comprising the steps of
- continuously obtaining handover failure data of a multitude of cells of the mobile communication system,
- continuously employing a machine learning engine (MLE) that computes a probability for successful handover from at least one cell of the mobile communication system to each of at least two neighboring cells of the mobile communication system, based on the obtained handover failure data,
- continuously updating the Neighbor Cell Relation Table (NCRT) with priorities (PRIO) for the at least two neighboring cells of the mobile communication system which priorities are deduced from the probability for successful handover and which priorities are higher for higher probability for successful handover and lower for lower probability for successful handover,
- in case of handover from one cell to one of the neighboring cells choosing the neighboring cell with the highest probability for successful handover.

2. Computer-implemented method according to claim 1, **characterized in that** the machine learning engine (MLE) puts a higher weight to younger handover failure data than to older handover failure data.

3. Computer-implemented method according to claim 1 or 2, **characterized in that** the handover failure data is obtained from network management functions of the mobile communication system.

4. Computer-implemented method according to any of the prededing claims, **characterized in that** hand over failure data contains handover statistics (HO-S) with a relative number of failed handovers from at least one cell of the mobile communication system to a neighboring cell of the mobile communication system.

5. Computer-implemented method according to any of the prededing claims, **characterized in that** the moving entity is an automated guided vehicle (AGV).

6. Computer program code means comprising instructions to cause a system containing at least one User Equipment on a moving entity, such as on a vehicle (AGV), the mobile communication system, the machine learning engine (MLE) and the Neighbor Cell Relation Table (NCRT) to perform all the steps of any one of the preceding claims.

7. Computer-implemented device comprising at least one User Equipment on a moving entity, such as on a vehicle (AGV), the mobile communication system, the machine learning engine (MLE) and the Neighbor Cell Relation Table (NCRT), which device is adapted to execute a method according to one of claims 1 to 5.
